Europäisches Patentamt

European Patent Office

Office européen des brevets

(11) Veröffentlichungsnummer: **0 384 384**

**A2**

(12) **EUROPÄISCHE PATENTANMELDUNG**

(21) Anmeldenummer: **90103214.4**

(22) Anmeldetag: **20.02.90**

(51) Int. Cl.5: **G01B 7/30**

Die Anmeldung wird, wie ursprünglich eingereicht, unvollständig veröffentlicht (Art. 93 (2) EPÜ). Die Stelle der Beschreibung, die offensichtlich eine Auslassung enthält, ist als Lücke an der entsprechenden Stelle ersichtlich.

(30) Priorität: **20.02.89 DE 3905102**

(43) Veröffentlichungstag der Anmeldung:
**29.08.90 Patentblatt 90/35**

(84) Benannte Vertragsstaaten:
**DE ES FR GB IT**

(71) Anmelder: **Klöckner-Humboldt-Deutz Aktiengesellschaft
Deutz-Mülheimer-Strasse 111 Postfach 80 05 09
D-5000 Köln 80(DE)**

(72) Erfinder: **Mertins, Karl-Heinz, Dr.-Ing.
Rathausstrasse 2a
D-5000 Köln 90(DE)**
Erfinder: **Starke, Rolf, Dipl.-Ing.
Südstrasse 3a
D-5200 Siegburg(DE)**

(54) **Verfahren und Vorrichtung zur Lenkwinkelerfassung im Lenkungsstrang von Fahrzeugen.**

(57) 2.1 Zur Erreichung einer automatischen Schaltung der Differentialsperren im Antriebsstrang von Fahrzeugen dienen Meßeinrichtungen, mit denen der Lenkwinkel der gelenkten Vorderräder erfaßt wird. Für geländegängige Fahrzeuge ist die Anbringung von Lenkwinkelerfassungseinrichtungen unmittelbar an der Vorderachse problematisch.

2.2 Zur Erreichung einer zuverlässigen Lenkwinkelmessung unabhängig vom Fahrzeugeinsatz ist vorgesehen, daß unmittelbar an der Lenksäule (10) ein mit einer Verzahnung (27) versehenes Geberrad (15) angebracht ist, welches mit Sensoren (16, 17) in Wirkverbindung steht, deren Signal gemeinsam mit dem eines Schalters (28) zur Erfassung der Lenkmittenstellung einer Auswerteelektronik (25) zugeführt wird, durch die mit Hilfe eines Ausgangssignals (24) Schaltelemente zur Betätigung der Differentialsperre beeinflußt werden können.

2.3. Durch das Verfahren und die Vorrichtung wird eine Lenkwinkelerfassung zur Betätigung von Differentialsperren dargestellt, die ohne erhöhten konstruktiven Mehraufwand beanspruchend für Fahrzeuge mit hydrostatischen Lenkanlagen geeignet ist.

FIG. 2

# Verfahren und Vorrichtung zur Lenkwinkelerfassung im Lenkungsstrang von Fahrzeugen

Die Erfindung betrifft ein Verfahren und eine Vorrichtung zur Lenkwinkelerfassung nach dem Oberbegriff des Anspruchs 1.

Zur automatischen Betätigung bzw. Beeinflussung von Schaltelementen und Hilfsaggregaten im Fahrzeug bietet sich an, den Lenkwinkel des Fahrzeugs als bestimmende Größe zu berücksichtigen, um beispielsweise für Hilfskraftlenkungen die Servo-Unterstützung abhängig vom Lenkwinkel zu verändern. Der Lenkwinkel kann dabei als eine für die Lenkkraft bestimmende Größe herangezogen werden, um so beispielsweise die größte Lenkkraftunterstützung bei großen Lenkausschlägen, die fast ausnahmslos bei geringer Fahrzeuggeschwindigkeit auftreten, zu erreichen. Außerdem bietet sich an, z. B. bei allradgetriebenen Fahrzeugen (Ackerschlepper), in Abhängigkeit des erfaßten Lenkwinkels die Differentialsperren zu betätigen.

Aus der DE-OS 33 10 386 ist eine Hilfskraftlenkung für ein Fahrzeug entnehmbar, die eine Drehwinkelerfassung der Lenksäule aufweist, die mit einer elektrischen Schaltung in Verbindung steht und in Abhängigkeit des Lenkwinkels die Druckbeaufschlagung des Arbeitszylinders für die servounterstützte Lenkung steuert.

Diese bekannte Lenkwinkelerfassung ist jedoch nicht anwendbar für Lenkanlagen, die keine dauerhaft definierte Mittenstellung des Lenkrades aufweisen, wie dies bei hydrostatischen Lenkanlagen der Fall ist. Durch das Wirkprinzip und den konstruktiven Aufbau von hydrostatischen Lenkanlagen ist keine dauerhaft definierte Mittenstellung des Lenkrades, korrespondierend zur Geradeausstellung der gelenkten Räder möglich. Die Lenkradstellung driftet und verändert somit den Drehwinkel im Zuge von Lenkaktivitäten. Die bislang bekannten Einrichtungen zur Lenkwinkelerfassung sind nicht geeignet, ein an der Lenksäule einer hydrostatischen Lenkanlage gemessenes Drehwinkelsignal als Eingangsgröße für eine Steuer- und Regeleinrichtung zu verwenden zur automatischen Betätigung von Schaltelementen.

Der Erfindung liegt die Aufgabe zugrunde, eine Lenkwinkelerfassung darzustellen, die auch für eine Lenkanlage einsetzbar ist, deren Lenksäule keine definierte Mittenstellung aufweist, wenig Bauraum beansprucht und einen einfachen Aufbau darstellt sowie auch für rauhen Fahrzeugeinsatz eine geschützte Installation ermöglicht.

Erfindungsgemäß wird die Aufgabe durch die kennzeichnenden Merkmale des ersten Anspruchs gelöst. Durch die Verwendung einer die Drehbewegung des Lenkradstranges (Lenksäule) erfassenden Sensoranordnung, deren Signale einer Auswerteelektronik zugeführt werden, wird ein driftbereinigtes Lenkrad-Stellungsignal ermöglicht, welches dem bekannten Übersetzungsverhältnis zwischen den Lenkradumdrehungen und dem Einschlagwinkel der gelenkten Räder entspricht. Aus dem Stand der Technik (Grundlagen Landtechnik, Bd. 34 (1984), Nr. 4, Seite 176 bis 179) sind bei hydrostatischen Lenkanlagen auftretende Schlupfwinkel veröffentlicht, die bei üblichen Lenkmanövern, wie auch in Ausnahmefällen (plötzliches Ausweichen eines Hindernisses) ermittelt wurden. Aus den bekannten und der Auswerteelektronik eingegebenen Eckwerten ist durch eine Trennung des Nutzsignalanteils vom durch Schlupf hervorgerufenen Störsignalanteil durch ein Filterverfahren (Filteranordnung) - eingebracht in der Auswerteelektronik - prinzipiell und mit vergleichsweise geringem Aufwand die notwendige Unterscheidung möglich. Damit wird ein aussagekräftiges Signal zur reproduzierbaren und sicheren Beeinflussung von Schalteelementen in Abhängigkeit des Lenkeinschlages ermöglicht.

Die erfindungsgemäße Lenkwinkelerfassung ist darstellbar ohne erhebliche konstruktive Mehraufwendungen aufgrund der wenig Bauraum beanspruchenden Sensoranordnung. Außerdem entfällt die Notwendigkeit einer Signalübertragung (Steckverbindung) im Bereich zwischen der Lenkachse und dem Fahrzeugrumpf zum Anschluß der Sensoren bzw. Schalter an das rumpffeste System zur Signalverarbeitung. Insbesondere für Ackerschlepper und geländegängige Fahrzeuge ist die Meßwerterfassung im Bereich der Lenkachse eine potentielle Störquelle im praktischen Einsatz.

In einer Ausgestaltung der Erfindung ist die Verwendung eines mit einer Außenverzahnung versehenen Geberrades vorgesehen, welches drehfest mit der Lenksäule verbunden ist und mit einer aus zwei Sensoren bestehenden Sensoranordnung in Wirkverbindung steht, die vorteilhaft eine wenig Bauraum benötigende Lenkwinkelerfassung dargestellt. Bedarfsabhängig bietet es sich an, die Sensoranordnung, die über eine Signalleitung mit der Auswerteelektronik verbunden ist, als eine alle Bauteile zusammenfassende Einheit auszubilden oder alternativ alle Bauteile einzeln anzuordnen.

Durch eine Anordnung der Sensoranordnung in radialer Nähe zu dem gezahnten Geberrad, wobei der Abstand der Sensormittellinien, gemessen an den dem Geberrad zugewandten Stirnflächen etwa der 1,5fachen Teilung der Geberradzahnung entspricht, wird eine Sensor-Signalpegel-Änderung zwischen den Zuständen "high" und "low" induziert, die um etwa eine halbe Teilung phasenverschoben ist.

Dieses erfindungsgemäße Meßverfahren erzeugt Informationen über den zeitlichen Lenkwinkelverlauf, ausgehend von einem beliebigen, bei Fahrtbeginn oder zum Zeitpunkt der Systeminitialisierung vorliegenden, größenmäßig nicht bekannten Anfangswert. Der Erfindungsgedanke ist vorteilhaft zu ergänzen durch die Anordnung eines einfachen Schalters an der Vorderachse oder an einem Lenkzylinder, dessen Ausgangssignal eine meßbare Veränderung erfährt, sobald die Mittenstellung der gelenkten Räder erreicht wird. Dieses Signal, das kurze Zeit nach Inbetriebnahme bzw. nach dem Anfahrvorgang des Fahrzeugs regelmäßig auftreten wird, kann vorteilhaft zum Nullsetzen des aus der Sensoranordnung im Lenkungsstrang gewonnenen Signals für den Lenkwinkel herangezogen werden. Dieser Vorgang kann entweder nach jedem Anfahrvorgang oder auch zusätzlich in bestimmten Zeitabständen während des Fahrbetriebs erfolgen. Alternativ dazu kann auf der Basis einer mittelbaren Identifikation von Fahrzuständen die Nullstellung erfolgen, die mit hoher Sicherheit mit einer Geradeausstellung der gelenkten Räder übereinstimmt. Ein solcher Zustand ist beispielsweise gekennzeichnet durch die andauernde Überschreitung einer bestimmten Fahrgeschwindigkeit während einer vorge gebenen Zeitdauer. Das Fahrgeschwindigkeitssignal kann dazu ohne zusätzliche Kosten von einer im Fahrzeug bereits installierten Sensoreinrichtung abgegriffen werden.

Als Sensoren für die Lenkwinkelerfassung können solche nach dem Hall-Prinzip, induktiv oder kapazitiv wirksame oder alternativ Gabellichtschranken verwendet werden. Darüber hinaus bietet sich an, alle weiteren berührungslos arbeitenden Bauarten und Wirkprinzipien zu verwenden. Zur technischen Realisierung der Erfindung können weiter Sensoren verwendet werden, deren Ausgangssignal direkt von der Drehwinkelgeschwindigkeit abhängig ist. Die Signalauswertung ist dann durch eine zusätzliche Integrieroperation der Lenkbewegung zu rekonstruieren.

Als geeignete Filteranordnung für die Auswerteelektronik bietet sich vorzugsweise eine digitale Signalverarbeitung an, durch die der Signalanteil, der durch den Schlupf der hydrostatischen Lenkeinrichtung erzeugt wird, eliminiert werden kann.

Ein Ausführungsbeispiel, das zur weiteren Erläuterung der Erfindung beiträgt, ist aus den Zeichnungen sowie der anschließenden Figurenbeschreibung entnehmbar. Es zeigt:

Fig. 1 den hydraulischen Kreislauf einer prinzipiellen hydrostatischen Lenkanlage ohne Lenkwinkelerfassung,

Fig. 2 alle wesentlichen Bauteile zur erfindungsgemäßen Lenkwinkelerfassung,

Fig. 3 in einer graphischen Darstellung den Signalpegelverlauf bei einer Lenkradverdrehung,

Fig. 4 das Flußdiagramm zur Nullstellenermittlung des Lenkwinkels ohne Schalter zur Bestimmung der Mittenstellung der gelenkten Achse.

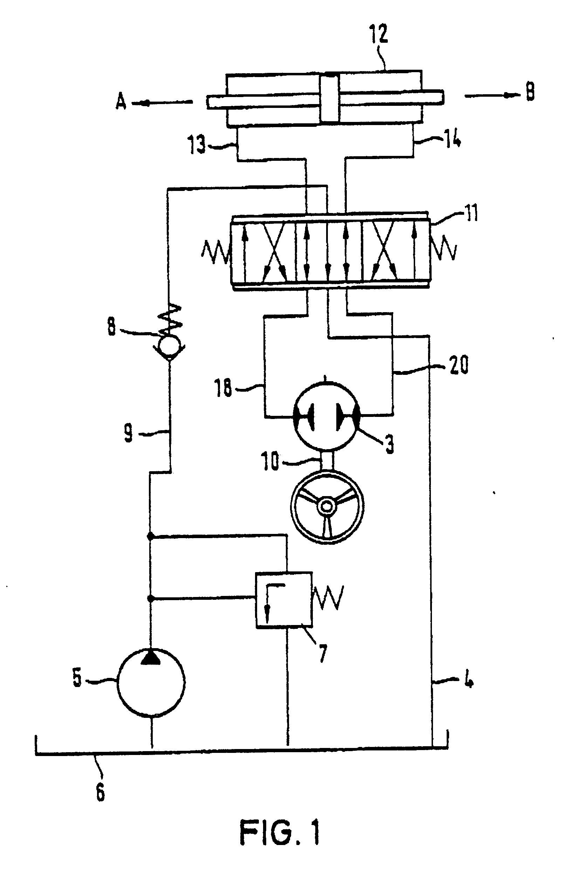

Der Fig. 1 ist ein schematischer Aufbau einer hydrostatischen Lenkung zu entnehmen, wie sie beispielsweise bei Landmaschinen zur Anwendung kommt. Dargestellt ist ein Mindestumfang von Bauteilen einer Lenkhydraulik, die für eine hydrostatische Lenkung benötigt wird. Der Hydraulikkreis wird gespeist durch die Förderpumpe 5, die das Fördermedium (Hydrauliköl) einem Vorratsbehälter 6 entnimmt und durch ein Leitungssystem 9 einem Wegeventil 11 zuführt. Um den Aufbau besser verdeutlichen zu können, sind die üblicherweise zu einer Einheit (Servostat) zusammengefaßten Bauteile, die Dosierpumpe 3 und das Wegeventil 11, getrennt voneinander dargestellt. Eine Verdrehung der Lenksäule 10 bewirkt eine Verschiebung des Wegeventils 11 in eine der beiden möglichen Stellbewegungen A oder B des Lenkzylinders 12. Zur Erreichung der Stellbewegung A erfolgt eine Verschiebung des Wegeventils 11 nach links, wodurch das Leitungssystem 9 mit der Verbindungsleitung 18 gekoppelt wird und folglich der Volumenstrom an der Dosierpumpe 3 ansteht, welche die Aufgabe hat, in Abhängigkeit der Lenksäulenbewegung dem Lenkzylinder 12 durch die Verbindungsleitung 20 bzw. Steuerleitung 14 einen dosierten Volumenstrom zukommen zu lassen. Eine Verschiebung des Lenkzylinders 12 in die zu der zuvor beschriebenen Stellbewegung A entgegengesetzten Richtung B wird erreicht durch eine Umkehrung der Drehbewegung der Lenksäule 10, die durch Verschiebung des Wegeventils 11 eine Kopplung des Leitungssystems 9 mit der Verbindungsleitung 20 herstellt und der dosierte Volumenstrom durch die Verbindungsleitung 18 bzw. Steuerleitung 13 dem Lenkzylinder 12 zugeführt wird mit der Folge einer Verschiebung des Stellkolbens im Stellzylinder 12 in Richtung B. Während der Stellbewegung kann das Hydraulikmedium, welches sich auf der Gegenseite des als doppelt wirkender Hydraulikzylinder ausgebildeten Lenkzylinders befindet, drucklos durch die Steuerleitung 14 und den Rücklauf 4 in den Vorratsbehälter 6 ablaufen. Als Sicherheitsglieder weist das in Fig. 1 dargestellte Hydraulikschaubild ein Überdruckventil 7 sowie ein Rückschlagventil 8 auf, die beide unmittelbar bzw. durch einen Bypaß mit dem Leitungssystem 9 verbunden sind.

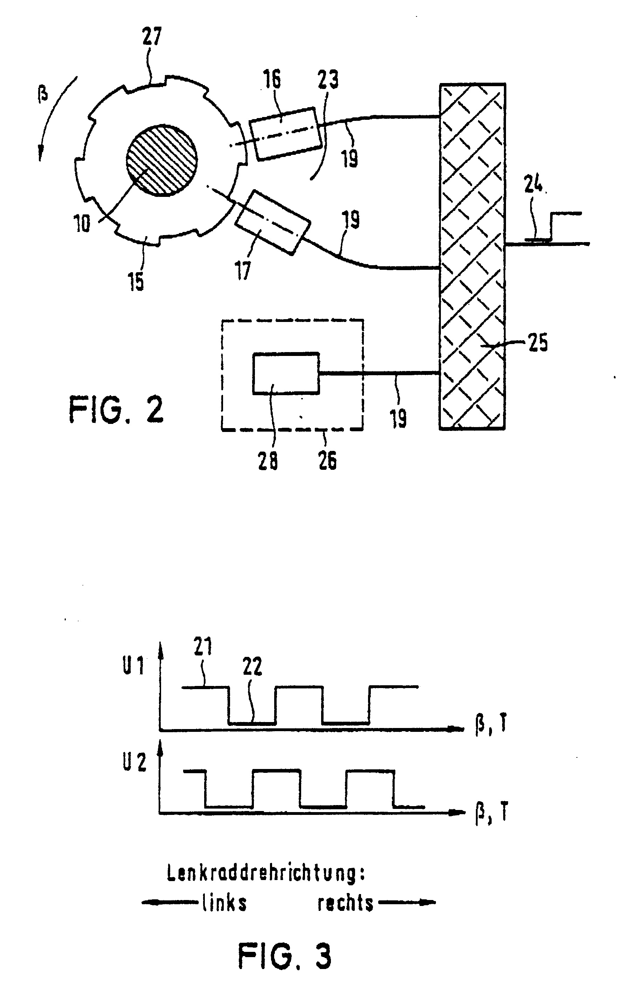

Den Aufbau des erfindungsgemäßen Meßverfahrens zur Bestimmung des Lenkwinkels bei Fahrzeugen mit hydrostatischen Lenkanlagen (siehe Fig. 1) ist der Fig. 2 entnehmbar. Der Aufbau sieht dabei ein konzentrisch um die Lenksäule 10 angeordnetes und damit drehfest verbundenes Geberrad 15 vor, welches am äußeren Umfang symmetrische Ausschnitte aufweist, in Form einer Verzahnung (27). Mit dem gezahnten Geberrad 15 stehen zwei mit Abstand dazu drehfest angeordnete Sensoren 16 und 17 in Wirkverbindung, wobei der Abstand der Sensormittellinien der 1,5-fachen Teilung der Verzahnung des Geberrades 15 entspricht. Diese Sensoranordnung (23) hat zur Folge, daß eine Drehung der Lenksäule 10 und damit verbunden des Geberrades 15 eine Signalpegel-Änderung zwischen den Zuständen "high" und "low" induziert, die um etwa die halbe Teilung phasenverschoben ist. Die von den Sensoren 16, 17 aufgenommenen Signale werden über Signalleitungen 19 einer Auswerteelektronik 25 zugeführt, die beispielsweise als Mikroprozessor ausgebildet ist, und als weitere Eingangsgröße das Signal eines Schalters 28 für die Bestimmung der Mittenstellung der gelenkten Räder erhält. Der in einer Sensoreinrichtung 26 eingebrachte bzw. damit verbundene Schalter 28 kann beispielsweise an der Vorderachse angebracht werden und immer dann ein Ausgangssignal an die Auswerteelektronik 25 durch die Signalleitung 19 weitergeben, wenn die gelenkten Räder sich in der Mittenstellung befinden. Dieses vom Schalter 28 gelieferte Ausgangssignal, das nach Inbetriebnahme bzw. nach dem Anfahrvorgang regelmäßig auftreten wird, kann zum Nullsetzen des aus der Sensoranordnung im Lenkungsstrang gewonnenen Signals für den Lenkwinkel herangezogen werden. Dieser Vorgang kann entweder nach jedem Anfahrvorgang oder zusätzlich auch in bestimmten Zeitabständen während des Fahrbetriebs erfolgen. Das Signal 24 ist als ein Ausgangssignal der Auswerteelektronik 25 anzusehen, durch das beispielsweise die automatische Schaltung der Differentialsperren im Antriebsstrang betätigbar sind.

Fig. 3 zeigt in einer graphischen Darstellung in zwei voneinander getrennten Kurvenverläufen den Signalpegelverlauf der Sensoren 16, 17 (siehe Fig. 2) in Abhängigkeit der Stellung des Geberrades 15. Die getrennte Darstellung der Spannungsverläufe verdeutlicht die bereits im Zusammenhang mit der Fig. 2 erwähnten, in einem bestimmten Abstand zur Teilung des Geberrades 15 angeordneten Sensoren 16, 17, die einen versetzten Signalpegel "low" oder "high" bewirken. Durch die Signalpegel-Änderung der Sensoren 16, 17 wird durch die Auswerteelektronik 25 die Drehrichtung abgeleitet. Die Drehrichtung links ist beispielsweise definierbar, wenn der Sensor 17 ein "high"-Signal abgibt und der Sensor 16 ein "low"-Signal oder zunächst der Sensor 16 ein "low"-Signal und anschließend der Sensor 17 ein "low"-Signal ergibt. Eine Rechtsdrehung ist bestimmbar, indem zunächst der Sensor 16 ein "low"-Signal und danach der Sensor 17 ein "high"-Signal abgibt; oder zunächst der Sensor 16 ein "high"-Signal und danach der Sensor 17 ein "low"-Signal.

Der Signalregelverlauf ist aufgetragen in einem Koordinatensystem, bei dem als Ordinate die Signalspannung (U1, U2) und als Abzisse die Veränderung des Drehwinkels $\beta$ (Drehrichtung: links und rechts) der Lenkeinrichtung dient, oder alternativ die Zeit im Sinne einer zeitlichen Darstellung des Lenkbewegungsvorganges.

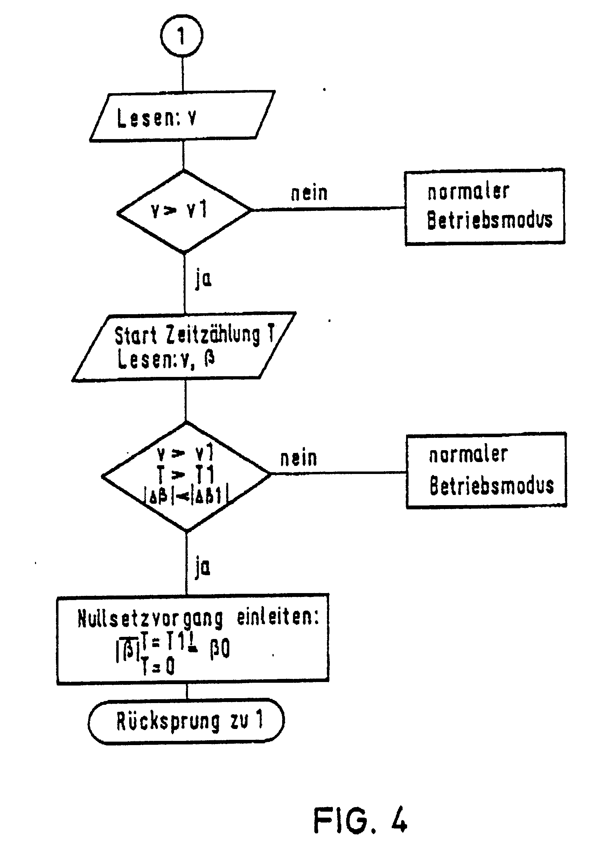

In Fig. 4 ist ein Flußdiagramm zur Nullstellungsermittlung des Lenkwinkels für Fahrzeuge mit hydrostatischen Lenkanlagen nach dem erfindungsgemäßen Aufbau dargestellt, zur Ermittlung der Identifikation des Fahrzustandes "Geradeausfahrt". Dabei ist kein Schalter zur Bestimmung der Mittenstellung der gelenkten Achse berücksichtigt.

Der Begriff "normaler Betriebsmodus" ist auf der Basis der jeweiligen mit dem Lenkwinkelsignal zu versorgenden Systeme und deren Sicherheitserfordernisse zu definieren. Es kann sowohl der bisher vorliegende Systemzustand beibehalten als auch ein sogenannter "fail-safe"-Zustand eingestellt werden.

Nachfolgende Erläuterungen sind bestimmt für die im Flußdiagramm aufgeführten Formelzeichen und Begriffe:
v - Fahrgeschwindigkeit,
T - Zeit,
$|..|$ - Betragswert,
$|\overline{..}|$ - Betragsmittelwert,
..0 - Konstantwert,
..1 - Konstantwert,
- Abweichung.

## Ansprüche

1. Verfahren und Vorrichtung zur Lenkwinkelerfassung im Lenkungsstrang von Fahrzeugen, insbesondere Landmaschinen, wobei der Lenkwinkel als bestimmende Größe zur automatischen Betätigung von Schaltelementen dient,
dadurch gekennzeichnet, daß mit dem Lenkungsstrang eine die Drehbewegung erfassende Sensoranordnung (23) in Verbindung steht, daß durch die Drehbewegung Sensorsignale erzeugt und einer Auswerteelektronik (25) zugeführt werden, daß die Auswerteelektronik (25) eine Filteranordnung aufweist, durch die ein Nutzsignal vom Störsignal unterscheidbar ist.

2. Vorrichtung zur Durchführung des Verfahrens nach Anspruch 1, mit einer hydrostatischen Lenkung,
dadurch gekennzeichnet, daß ein der Drehbewegung einer Lenksäule (10) folgendes Geberrad (15) vorgesehen ist, das mit der Sensoranordnung (23) in Wirkverbindung steht.

3. Vorrichtung nach Anspruch 2,
dadurch gekennzeichnet, daß das Geberrad (15) eine am Außenumfang eingebrachte Verzahnung aufweist.

4. Vorrichtung nach einem der Ansprüche 2 oder 3,
dadurch gekennzeichnet, daß die Sensoranordnung (23) zwei Sensoren (16, 17) vorsieht.

5. Vorrichtung nach einem der vorhergehenden Ansprüche 2 bis 4,
dadurch gekennzeichnet, daß die Anordnung der Sensoren (16, 17) zueinander der 1,5fachen Teilung der Verzahnung (27) vom Geberrad (15) entsprechen.

6. Vorrichtung nach einem der vorhergehenden Ansprüche 2 bis 5,
dadurch gekennzeichnet, daß ein Schalter (28) zur Bestimmung der Mittenstellung der Lenkung dient.

7. Vorrichtung nach einem der vorhergehenden Ansprüche 2 bis 6,
dadurch gekennzeichnet, daß der Schalter (28) im Bereich der lenkbaren Achse des Fahrzeugs eingesetzt ist.

8. Vorrichtung nach einem der vorhergehenden Ansprüche 2 bis 7,
dadurch gekennzeichnet, daß die in der Auswerteelektronik (25) integrierte Filteranordnung als digitale Signalverarbeitung ausgebildet ist.

FIG. 1

**FIG. 2**

Lenkraddrehrichtung:
←——links     rechts——→

**FIG. 3**

KÖLN-DEUTZ     D89/003

FIG. 4

KÖLN-DEUTZ     D 891003